# EUROPEAN PATENT APPLICATION

(11) **EP 2 800 089 A1**
(43) Date of publication of application: **05.11.2014**
(21) Application number: 12862124.0
(22) Date of filing: 18.10.2012
(51) Int. Cl.: G09G 3/34, G06F 3/048, G09G 3/20

(54) **DISPLAY DEVICE, DISPLAY METHOD, AND PROGRAM**

(30) Priority: 28.12.2011 JP 2011288929
(71) Applicant: NEC CASIO Mobile Communications, Ltd., Kawasaki-shi, Kanagawa 211-8666 (JP)
(72) Inventor: ATANI, Kenichi, Kawasaki-shi, Kanagawa 211-8666 (JP)
(74) Representative: Vossius & Partner
(86) International application number: PCT/JP2012/076897
(87) International publication number: WO 2013/099412

(57) **Abstract**

The display device according to the present invention is provided with a plurality of display units, a mechanism that binds together at least one part of each of the plurality of display units, and a drawing control unit that, when drawing on a specific display unit from among the plurality of display units, prioritizes drawing on, from among the display regions of the specific display unit, a specific region other than regions that include the mechanism.

## Description

### Technical Field

The present invention relates to a display device, a display method, and a program for displaying information such as images or characters.

### Background Art

In recent years, devices have been proposed that are constituted by bundling a plurality of display units as a display device and that display information on each of the plurality of display units (for example, refer to Patent Document 1).

In the present specification, when the display device is in the closed state, the first-ranked display unit is defined as the uppermost layer and display units in the reverse direction are defined as lower layers. When in the opened state, the display unit for which the entire surface of the display region is located on a surface that is visible by the user is defined as the foremost surface.

### Literature of the Prior Art

### Patent Documents

Patent Document 1: Japanese Unexamined Patent Application Publication No. 2003-58081

### Summary of the Invention

### Problem to be Solved by the Invention

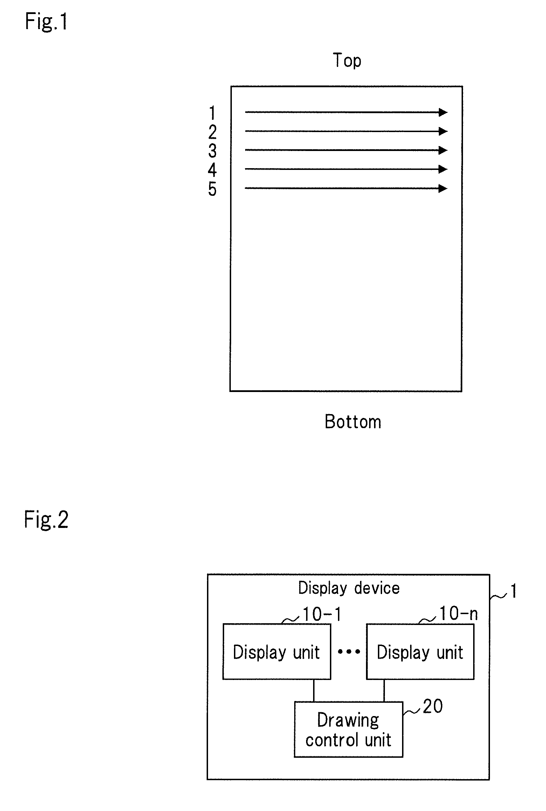

As shown in FIG. 1, as a method of drawing information on a display unit, the typical method of performing drawing is from top to bottom, the direction in which a user is assumed to view a display unit (in FIG. 1, from left to right) being the standard. This is because a user normally begins to view display content from the top and then progressively looks toward the bottom.

However, the display device disclosed in Patent Document 1 is a configuration in which a plurality of display units are bound together at one side of each display unit. As a result, it is assumed that when the user flips through the display units, the user will frequently flip display units from the other side that is located opposite the side by which the plurality of display units are bound.

Based on this assumption, when the user flips through display units, the region for which display content is easiest to view within the display region of the display unit that is positioned at a lower layer is the region in the vicinity of the other side.

The problem therefore arises that, in a method in which image drawing is performed from top to bottom as previously described, there will not be enough time to execute image drawing on a region in the vicinity of the other side, for which the user can most easily view display content, on display units that are located at lower layers when the user rapidly flips through display units.

It is therefore an object of the present invention to provide a display device, a display method, and a program that solve the above-described problem and that enable the easy viewing of the display content of display units that are located at lower layers even when the user rapidly flips through display units.

Means for Solving the Problem

The first display device of the present invention is equipped with:
a plurality of display units;
a mechanism that binds together at least one part of each of the plurality of display units; and
a drawing control unit that, when performing drawing on a specific display unit from among the plurality of display units, performs drawing while prioritizing, from among display regions of the specific display unit, a specific region other than regions that contain the mechanism.

The second display device of the present invention is equipped with:
a plurality of display units;
a visibility determination unit that determines, from among display regions of a specific display unit from among the plurality of display units, a specific region that can be seen by the user; and
a drawing control unit that, when performing drawing on the specific display unit, performs drawing on display regions of the specific display unit based on the determination results of the visibility determination unit.

The first display method of the present invention is a display method realized by a display device that includes a plurality of display units and a mechanism that binds together at least one part of each of the plurality of display units, the display method including:
when performing drawing on a specific display unit from among the plurality of display units, performing drawing while prioritizing, from among display regions of the specific display unit, a specific region other than regions that include the mechanism.

The second display method of the present invention is a display method that is realized in a display device that includes a plurality of display units, the display method including:
determining, from among display regions of a specific display unit from among the plurality of display units, specific regions that can be seen by the user; and
when performing drawing on the specific display unit, performing drawing on display regions of the specific display unit based on the determination results.

The first program of the present invention causes a display device that includes a plurality of display units and a mechanism that binds together at least one part of each of the plurality of display units to execute a procedure of,
when performing drawing on a specific display unit from among the plurality of display units, performing drawing while prioritizing, from among display regions of the specific display unit, a specific region other than regions that include the mechanism.

The second program of the present invention causes a display device that includes a plurality of display units to execute procedures of:
determining, from among display regions of a specific display unit from among the plurality of display units, a specific region that is visible by the user; and
when performing drawing on the specific display unit, performing drawing on display regions of the specific display unit based on the determination results.

### Effect of the Invention

By means of the present invention, the effect is obtained in which, even when the user rapidly flips through display units, the display content of display units located in lower layers can be easily viewed.

### Brief Description of the Drawings

FIG. 1 shows an example of drawing control of a related display unit.
FIG. 2 is a block diagram showing the configuration of a display device of the first exemplary embodiment of the present invention.
FIG. 3 shows an example of the external configuration of the display device of the present invention.
FIG. 4 shows an example of the external configuration of the display device of the present invention.
FIG. 5 shows an example of a specific region in the case of a configuration in which display units are bound together on one side in the display device of the first exemplary embodiment of the present invention.
FIG. 6 shows an example of the flipping of display units in the case of a configuration in which display units are bound together on one side in the display device of the first exemplary embodiment of the present invention.
FIG. 7 shows an example of the flipping of display units in the case of a configuration in which display units are bound together on one side in the display device of the first exemplary embodiment of the present invention.
FIG. 8 shows an example of a specific region in the case of a configuration in which display units are bound together at one point of the corners of the display units in the display device of the first exemplary embodiment of the present invention.
FIG. 9 shows an example of a specific region in the case of a configuration in which display units are bound together at one point of a corner in the display device of the first exemplary embodiment of the present invention.
FIG. 10 shows an example of the flipping of display units in the case of a configuration in which display units are bound together at one point of a corner in the display device of the first exemplary embodiment of the present invention.
FIG. 11 shows an example of the flipping of display units in the case of a configuration in which display units are bound together at one point of a corner in the display device of the first exemplary embodiment of the present invention.
FIG. 12 shows an example of the flipping of display units in the case of a configuration in which display units are bound together at one point of a corner in the display device of the first exemplary embodiment of the present invention.
FIG. 13 is a block diagram showing the configuration of the display device of the second exemplary embodiment of the present invention.
FIG. 14 shows an example of the arrangement of photosensors in the case of a configuration in which display units are bound together at one side in the display device of the second exemplary embodiment of the present invention.
FIG. 15 shows an example of a specific region in the case of a configuration in which display units are bound together at one side in the display device of the second exemplary embodiment of the present invention.
FIG. 16 shows an example of a specific region in the case of a configuration in which display units are bound together at one side in the display device of the second exemplary embodiment of the present invention.
FIG. 17 shows an example of the arrangement of optical sensors in the case of a configuration in which display units are bound together at one point of a corner in the display device of the second exemplary embodiment of the present invention.
FIG. 18 shows an example of a specific region in the case of a configuration in which display units are bound together at one point of a corner in the display device of the second exemplary embodiment of the present invention.
FIG. 19 shows an example of the arrangement of contact sensors or proximity sensors in the case of a configuration in which display units are bound together at one side in the display device of the second exemplary embodiment of the present invention.
FIG. 20 shows an example of a specific region in the case of a configuration in which display units are bound together at one side in the display device of the second exemplary embodiment of the present invention.
FIG. 21 shows an example of a specific region in the case of a configuration in which display units are bound together at one side in the display device of the second exemplary embodiment of the present invention.
FIG. 22 shows an example of the arrangement of contact sensors or proximity sensors in the case of a configuration in which display units are bound together at one point of a corner in the display device of the second exemplary embodiment of the present invention.
FIG. 23 shows an example of a specific region in the case of a configuration in which display units are bound together at one point of a corner in the display device of the second exemplary embodiment of the present invention.

### Mode for Carrying Out the Invention

Exemplary embodiments of the present invention are next described with reference to the accompanying drawings.

### (1) First Exemplary Embodiment

As shown in FIG. 2, display device 1 of the present exemplary embodiment includes display units 10-1-10-n (where n is a natural number equal to or greater than 2. In the following explanation, "display unit 10" refers to any unspecified display unit.), and drawing control unit 20.

Display units 10-1-10-n are, for example, electronic paper, and are stacked together and bound together at one part.

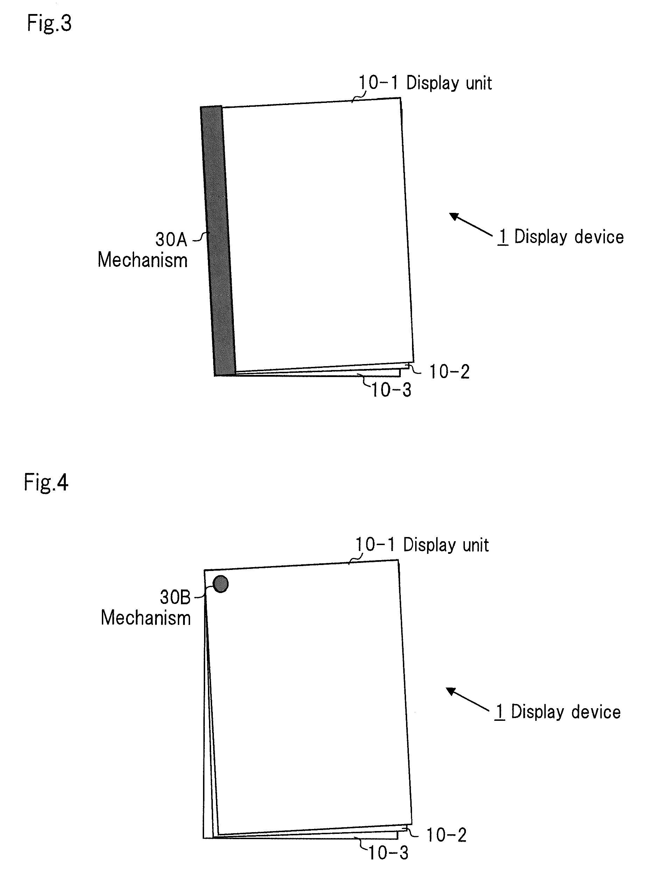

FIGs. 3 and 4 show examples in which display units 10-1-10-n are bound together. In FIGs. 3 and 4, n is "3."

In the example of FIG. 3, display units 10-1-10-3 are bound together by mechanism 30A at one side (the left side in FIG. 3). In the example of FIG. 4, display units 10-1-10-3 are bound together by mechanism 30B at one point of a corner (one point of the upper left corner in FIG. 4).

Drawing control unit 20 draws information such as images or characters on each of display units 10-1-10-n.

At such times, drawing control unit 20 performs drawing while prioritizing, from among the display regions of each of display units 10-1-10-n, a specific region that excludes regions that include mechanism 30A or mechanism 30B. The specific region is preferably separated from mechanism 30A or mechanism 30B by at least a predetermined distance.

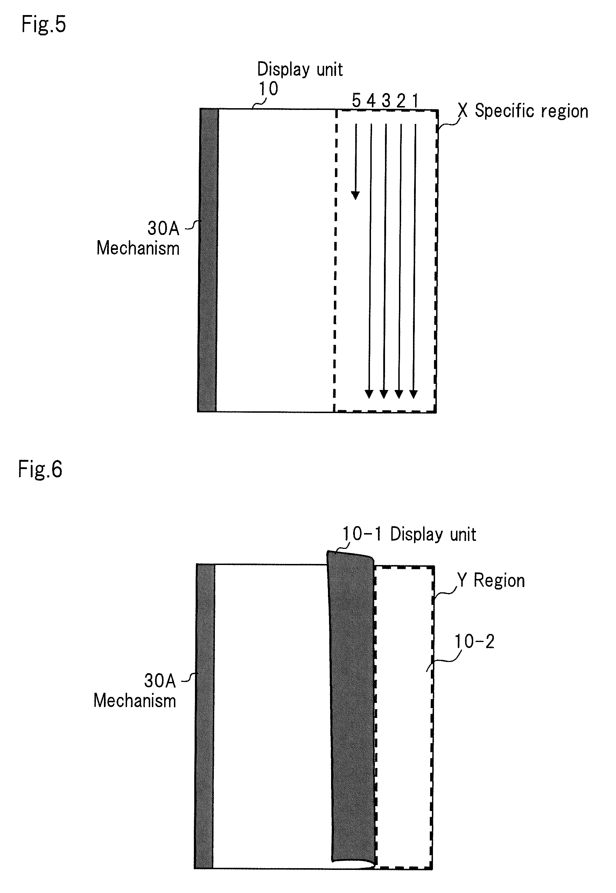

For example, when mechanism 30A is a mechanism that binds together one side of display units 10 (FIG. 3), drawing control unit 20 takes as specific region X a region that excludes regions that contain mechanism 30A and performs drawing while prioritizing specific region X, as shown in FIG. 5. In FIG. 5, drawing starts in specific region X from the upper right corner and proceeds toward the lower right corner, but the starting point of drawing and the drawing direction are not limited to this example. In addition, the size and shape of specific region X are not limited to the size and shape shown in FIG. 5.

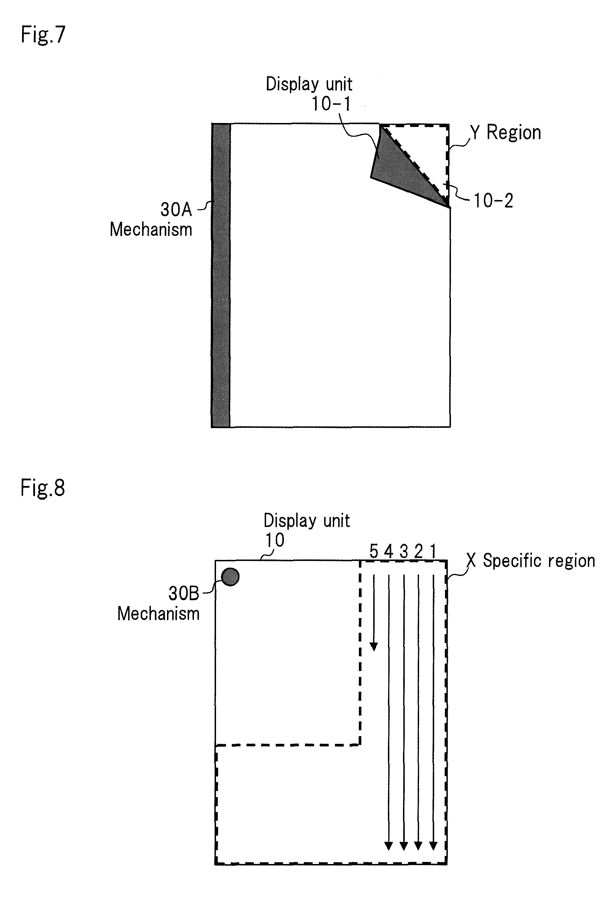

In the case of this configuration, the user is assumed to flip through display units 10 from the right side as shown in FIG. 6 or from the upper right corner (or lower right corner) as shown in FIG. 7.

As a result, when the user flips display unit 10-1, the region in which the display content is most readily visible of display unit 10-2 that is positioned in the layer below is region Y in the vicinity of the right side in FIG. 6 or region Y of the upper right corner in FIG. 7.

In the present exemplary embodiment, drawing control unit 20 draws while prioritizing region Y of FIGs. 6 and 7 as specific region X. As a result, the display content of display unit 10-2 is readily visible even when the user rapidly flips display unit 10-1.

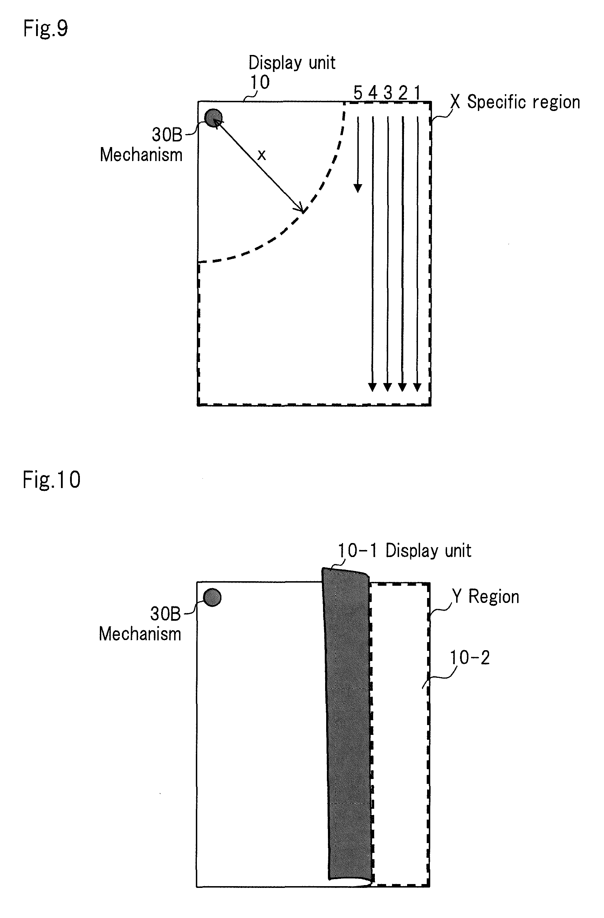

When mechanism 30B is a mechanism that binds together one point of the corners of display units 10 (FIG. 4), drawing control unit 20 takes a region that excludes regions that include mechanism 30B as specific region X as shown in FIG. 8 and performs drawing while prioritizing specific region X. In FIG. 8, drawing is started in specific region X from the upper right corner and proceeds toward the lower right corner, but the starting point of drawing and the drawing direction are not limited to this point or direction. In addition, the size and shape of specific region X are not limited to the size and shape shown in FIG. 8, and may be as shown in, for example, FIG. 9. FIG. 9 shows an example in which a region is taken as specific region X that does not include mechanism 30B, and moreover, that is separated by a predetermined distance x from mechanism 30B.

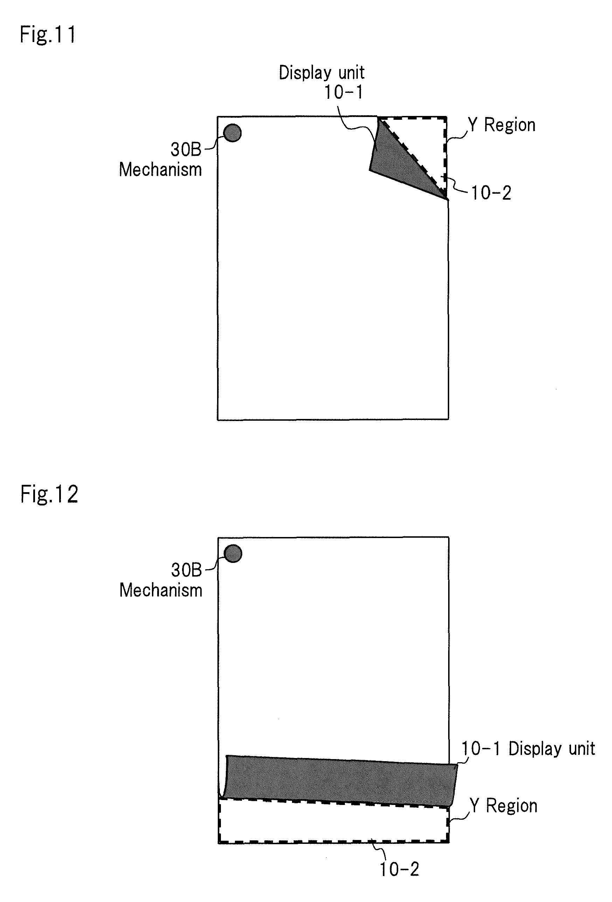

In the case of this configuration, the user is normally assumed to flip through display units 10 from the right side as shown in FIG. 10 or from the upper right corner as shown in FIG. 11 (or lower right corner or lower left corner) or from the lower side as shown in FIG. 12.

As a result, when the user flips display unit 10-1, the region in which display content, that is most readily visible, from among display region of display unit 10-2, that is positioned in the layer below is region Y in the vicinity of the right side in FIG. 10, region Y of the vicinity of the upper right corner in FIG. 11, or region Y in the vicinity of the lower side in FIG. 12.

In the present exemplary embodiment, drawing control unit 20 performs drawing while prioritizing region Y of FIG. 10, FIG. 11, or FIG. 12 as specific region X of FIG. 8 or FIG. 9. As a result, the display content of display unit 10-2 is readily visible even when the user rapidly flips display unit 10-1.

In the present exemplary embodiment as described hereinabove, drawing control unit 20, when performing drawing on display units 10 performs drawing while prioritizing, from among the display regions of the display units 10, those specific regions that exclude regions that include the mechanism that binds together display units 10.

In other words, drawing control unit 20 draws image while prioritizing, from among the display regions of display units 10, regions that are readily visible when the user flips display units 10.

The effect is therefore obtained in which the display content of display units 10 that are located in lower layers is readily visible even when the user rapidly flips through display units 10.

In the present exemplary embodiment, drawing control unit 20 does not need to perform the above-described drawing control for all of display units 10-1-10-n. For example, in FIG. 3, when the insertion or extraction of display units 10-1-10-3 is not possible, display unit 10-1 is always the uppermost layer and never a lower layer. As a result, ordinary drawing control shown in FIG. 1 may be performed for display unit 10-1.

When rapidly flipping through display units 10 in search of display unit 10 that displays desired information, the user is able to determine the display content by merely viewing the readily visible regions (i.e., the specific region of the present exemplary embodiment) of the display regions of display units 10. In such cases, the drawing on only the specific regions is sufficient and it is not necessary to perform drawing on all display regions of display units 10.

Drawing control unit 20 thus may perform drawing on only the specific regions among the display regions of display units 10 and does not need to perform drawing on other regions. However, the object of this drawing control is only display units 10 that are located in layers below the uppermost display unit 10 or in layers below display unit 10 that is located on the foremost surface, and drawing is performed on all display regions for display unit 10 of the uppermost layer or display unit 10 that is located on the foremost surface.

The method of determining whether display unit 10 is located in the foremost surface is described hereinbelow.

### (2) Second Exemplary Embodiment

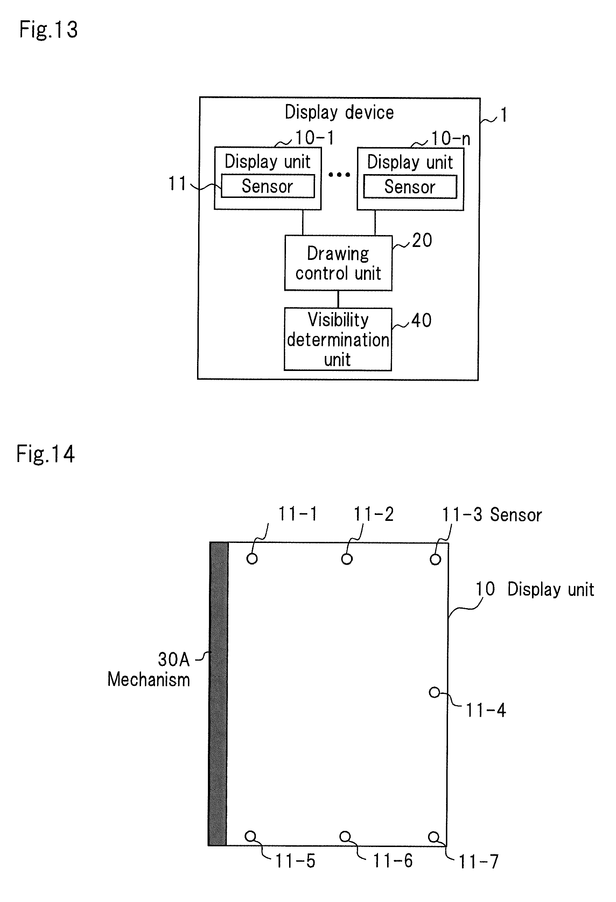

FIG. 13 is a block diagram showing the configuration of display device 1 of the second exemplary embodiment of the present invention. As shown in FIG. 13, display device 1 of the present exemplary embodiment differs from the first exemplary embodiment in that sensors 11 are provided in each of display units 10-1-10-n and visibility determination unit 40 is provided.

Sensors 11 are constituted by photosensors that detect extraneous light. Alternatively, sensors 11 are constituted by contact sensors or proximity sensors that detect the contact or proximity of an object such as a pen or a user's finger and the position of contact or proximity.

Based on the detection results of sensors 11, visibility determination unit 40 determines, from among the display regions of each of display units 10-1-10-n, the specific regions that are visible by a user.

Display units 10-1-10-n are bound together as shown in FIG. 3 or FIG. 4 similar to the first exemplary embodiment.

The details of sensors 11 and visibility determination unit 40 are next described.

The configuration of sensors 11 by photosensors is first considered.

For example, when mechanism 30A is a mechanism that binds together one side of display units 10 (FIG. 3), sensors 11-1-11-7 are arranged in display unit 10 as shown in FIG. 14. In this case, visibility determination unit 40 determines specific region X that can be seen by the user based on the positions of sensors 11 among sensors 11-1-11-7 that detect extraneous light.

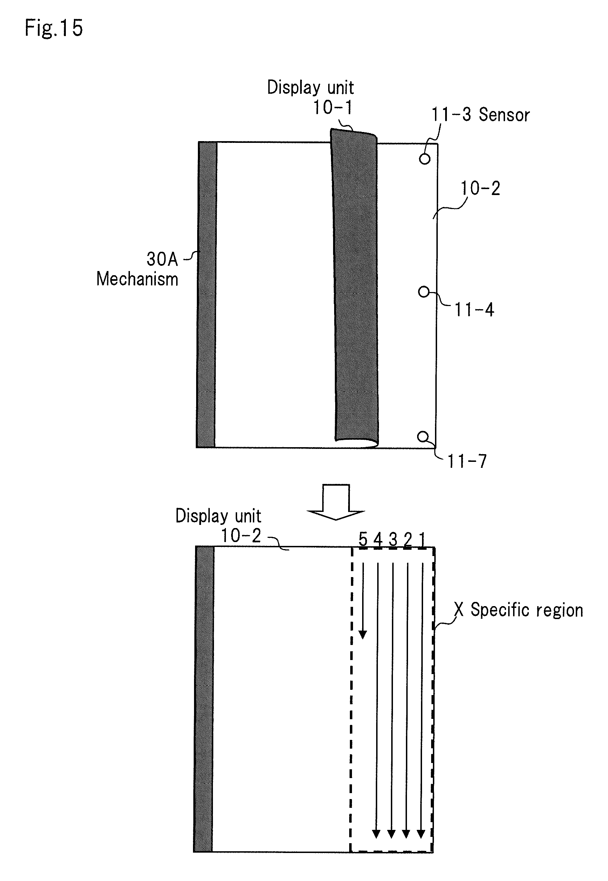

As shown in FIG. 15, on display unit 10-2, sensors 11-3, 11-4 and 11-7 detect extraneous light. In this case, the user is assumed to have flipped display unit 10-1 from the right side.

Visibility determination unit 40 then determines, from among the display regions of display unit 10-2, the region that includes sensors 11-3, 11-4 and 11-7 to be specific region X that can be seen by the user. Drawing control unit 20 then performs drawing while prioritizing specific region X. The starting point and drawing direction of drawing within specific region X are not subject to any particular limitations. In addition, the size and shape of specific region X are also not subject to any particular limitations.

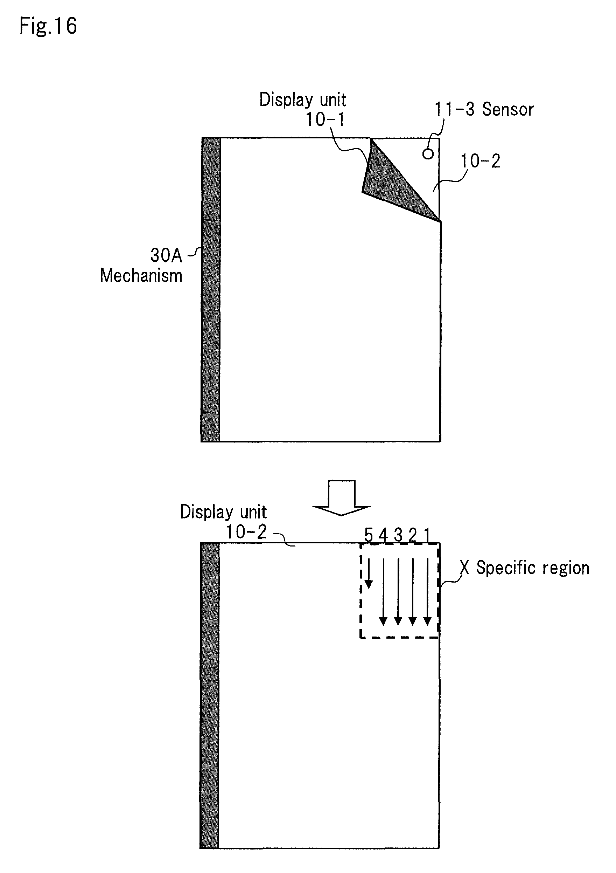

Next, as shown in FIG. 16, it is assumed that sensor 11-3 detects extraneous light in display unit 10-2. In this case, the user is assumed to have flipped display unit 10-1 from the upper right corner.

Visibility determination unit 40 hereupon determines, from among the display regions of display unit 10-2, the region that includes sensor 11-3 to be specific region X that is visible by the user. Drawing control unit 20 then performs drawing while prioritizing specific region X. The starting point and drawing direction of drawing within specific region X are not subject to any particular limitations. In addition, the size and shape of specific region X are not subject to any particular limitation.

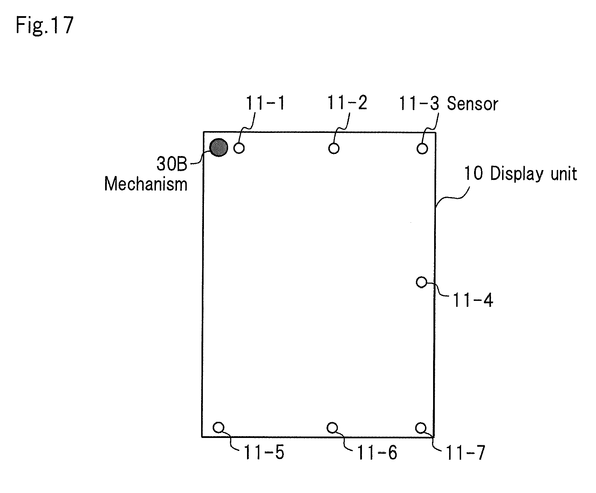

When mechanism 30B is a mechanism that binds together one point of the corners of display units 10 (FIG. 4), sensors 11-1-11-7 are arranged on display units 10 similar to FIG. 14, as shown in in FIG. 17. In this case, visibility determination unit 40 determines specific region X that is visible by the user based on the positions of, among sensors 11-1-11-7, sensors 11 that detect extraneous light.

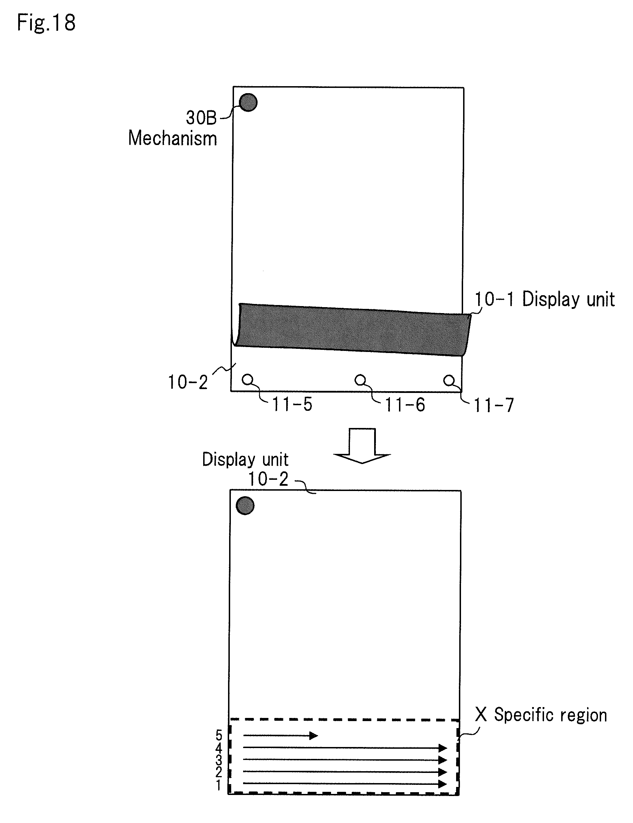

It is here assumed that in display unit 10-2, sensors 11-5, 11-6 and 11-7 detect extraneous light, as shown in FIG. 18. In this case, the user is assumed to have flipped display unit 10-1 from the lower side.

Visibility determination unit 40 hereupon determines that, from among the display regions of display unit 10-2, the region that includes sensors 11-5, 11-6 and 11-7 is specific region X that is visible by the user. Drawing control unit 20 then performs drawing while prioritizing specific region X. The starting point and drawing direction of drawing within specific region X are not subject to any particular limitations. In addition, the size and shape of specific region X are also not subject to any particular limitations.

In the configuration of FIG. 17, when the user flips display unit 10-1 from the right side or upper right corner, specific region X should be determined similarly to the configuration of FIG. 14. In the configuration of FIG. 17, sensors 11 may also be arranged in the vicinity of the center of the left side, whereby the configuration can handle a case in which the user flips display unit 10-1 from the left side, and the area of the left side can thus be determined to be specific region X.

A case is next considered in which sensors 11 are made up by contact sensors or proximity sensors.

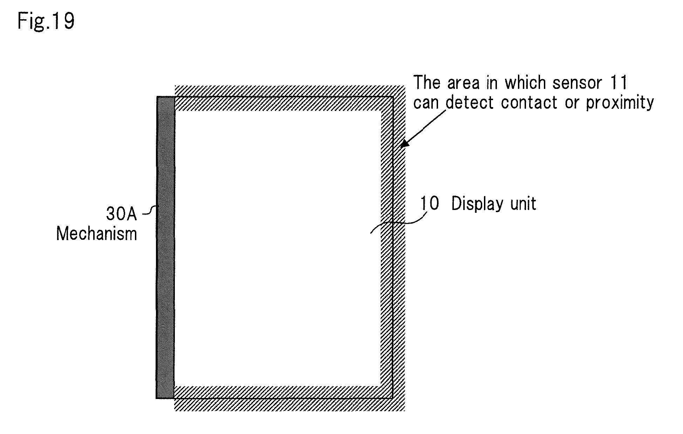

For example, when mechanism 30A is a mechanism that binds together one side of display units 10 (FIG. 3), sensors 11 are arranged on display units 10 to enable detection of contact or proximity to the right side, upper side, or lower side, i.e., sides other than the left side in which mechanism 30A is provided, as shown in FIG. 19. In addition, visibility determination unit 40 determines specific region X that is visible by the user based on the positions at which sensors 11 detected contact or proximity.

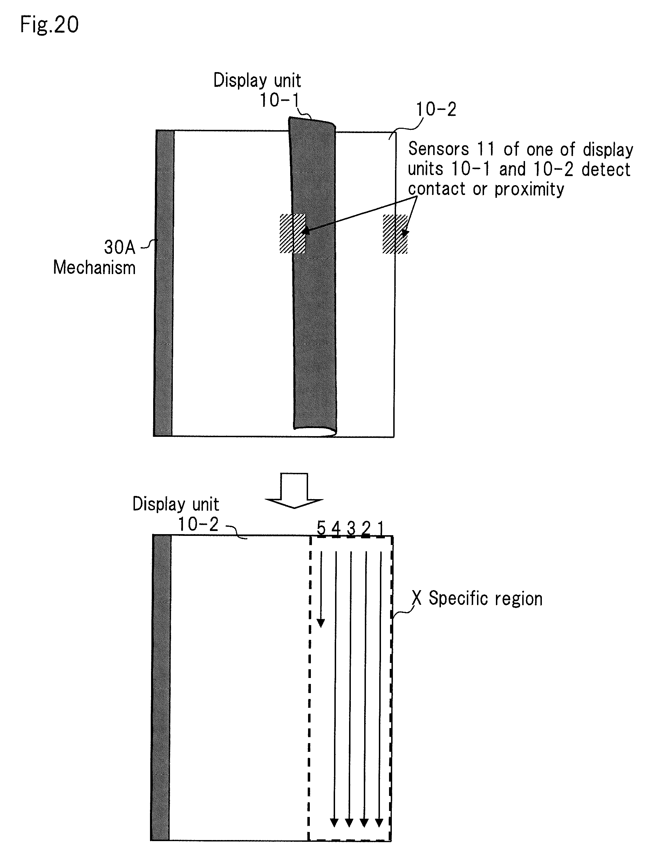

As shown in FIG. 20, a transition is assumed to have occurred from a state, in which sensors 11 of both of display units 10-1 and 10-2 detect contact or proximity to the right side, to a state in which sensors 11 of one of display units 10-1 and 10-2 no longer detects contact, or proximity to the right side. In this case, the user is assumed to have flipped display unit 10-1 from the right side.

Visibility determination unit 40 thereupon determines, from among the display regions of display unit 10-2, the region of the vicinity of the right side to be specific region X that is visible by the user. Drawing control unit 20 then performs drawing while prioritizing specific region X. The starting point and drawing direction of drawing within specific region X are not subject to any particular limitations. In addition, the size and shape of specific region X are also not subject to any particular limitations.

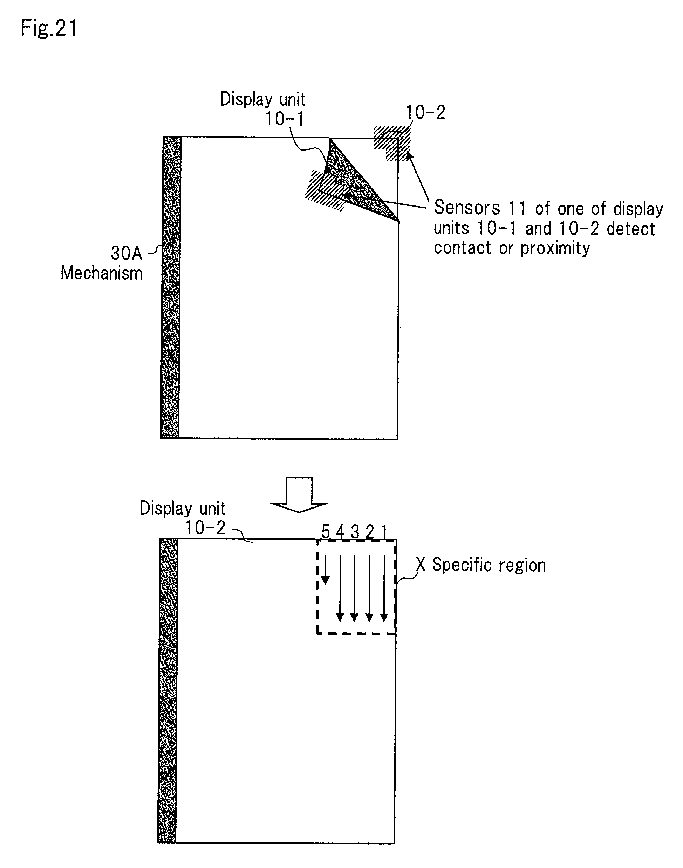

It is next assumed, as shown in FIG. 21, that a transition occurs from a state, in which sensors 11 of both display units 10-1 and 10-2 detect contact or proximity to the vicinity of the upper right corner, to a state in which sensors 11 of one of display units 10-1 and 10-2 no longer detects contact or proximity to the vicinity of the upper right corner. In this case, the user is assumed to have flipped display unit 10-1 from the vicinity of the upper right corner.

Visibility determination unit 40 thereupon determines that, from among the display regions of display unit 10-2, the region of the vicinity of the upper right corner is specific region X that is visible by the user. Drawing control unit 20 then performs drawing while prioritizing specific region X. The starting point and drawing direction of drawing within specific region X are not subject to any particular limitations. In addition, the size and shape of specific region X are also not subject to any particular limitations.

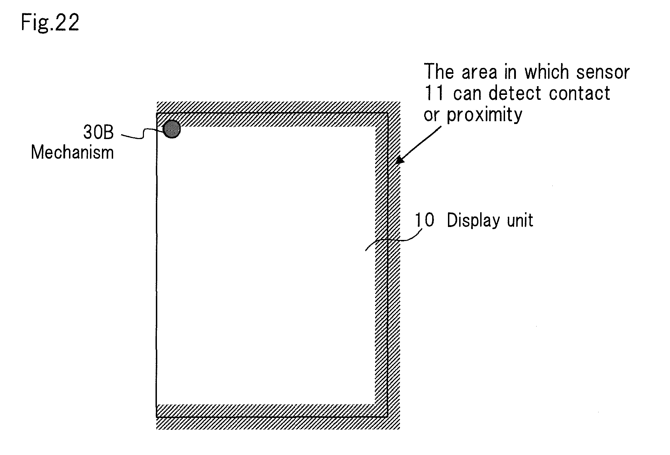

Further, in a case in which mechanism 30B is a mechanism that binds together one point of the corners of display units 10 (FIG. 4) as well, sensors 11 are arranged on display units 10 to enable detection of contact or proximity to the right side, upper side, or lower side similar to FIG. 19, as shown in FIG. 22. Visibility determination unit 40 determines specific region X that is visible by the user based on the positions at which sensors 11 detected contact or proximity.

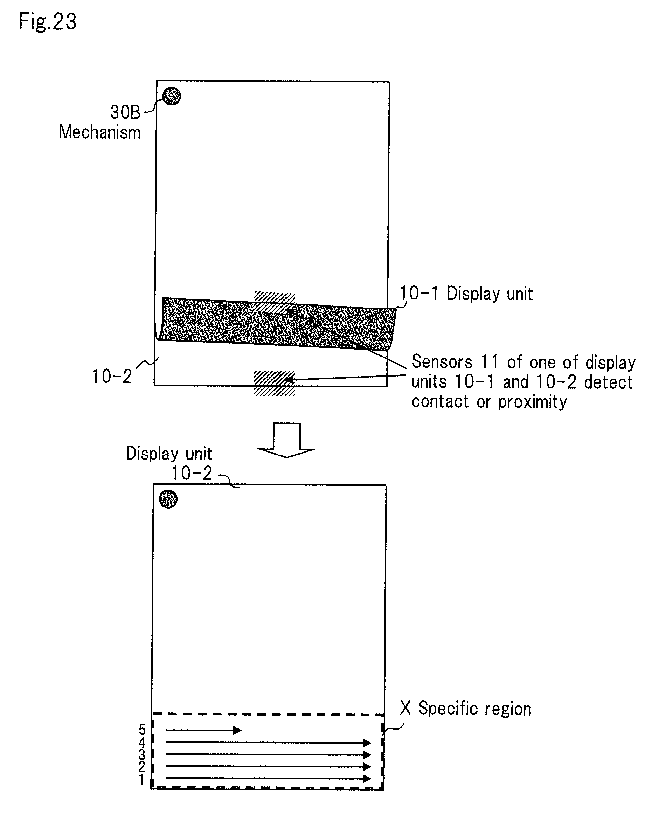

As shown in FIG. 23, a case is assumed in which a transition occurs from a state, in which sensors 11 of both display units 10-1 and 10-2 detect contact or proximity to the lower side, to a state in which sensors 11 of one of display units 10-1 and 10-2 no longer detects contact or proximity. In this case, it is assumed that the user has flipped display unit 10-1 from the lower side.

Visibility determination unit 40 thereupon determines that, from among the display regions of display unit 10-2, the region of the vicinity of the lower side is specific region X that is visible by the user. Drawing control unit 20 then performs drawing while prioritizing specific region X. The starting point and drawing direction of drawing within specific region X are not subject to any particular limitations. In addition, the size and shape of specific region X are not subject to any specific limitations.

In the configuration of FIG. 22, specific region X should be determined similarly to the configuration of FIG. 19 when the user flips display unit 10-1 from the right side or upper right corner. In addition, in the configuration of FIG. 22, sensors 11 capable of detecting contact or proximity to the left side may be arranged, whereby a case in which the user flips display unit 10-1 from the left side can also be handled and the vicinity of the left side can also be determined to be specific region X.

In the present exemplary embodiment as described hereinabove, visibility determination unit 40 determines specific regions that are visible by the user from among the display regions of display units 10, and drawing control unit 20, when performing drawing on display units 10, performs drawing on display units 10 based on the determination results of visibility determination unit 40 for these display units 10.

As a result, drawing can be performed while prioritizing, from among the display regions of display units 10, specific regions that are visible by the user.

Accordingly, the effect is obtained in which the display content of display unit 10 located in a lower layer can be readily viewed even when the user rapidly flips through display units 10.

In the present exemplary embodiment, drawing control unit 20 does not need to perform the above-described drawing control for all of display units 10-1-10-n. For example, in FIG. 3, if insertion or extraction of display units 10-1-10-n is not possible, display unit 10-1 will always be the uppermost layer and will not become the lower layer. As a result, the typical drawing control shown in FIG. 1 may be performed for display unit 10-1.

Alternatively, when rapidly flipping through display units 10 to search for display unit 10 that is displaying desired information, the user can potentially determine the display content by merely viewing the regions that can be seen among the display regions of display units 10 (i.e., the specific regions of the present exemplary embodiment). In such a case, it is not necessary to perform drawing on all display regions of display units 10, and the drawing on only specific regions is sufficient.

Drawing control unit 20 may thus perform drawing on only specific regions among the display regions of display units 10 and not perform drawing on other regions. However, the object of this drawing control is only display units 10 located in layers below display unit 10 of the uppermost layer or in layers below display unit 10 that is located foremost, and drawing on all display regions is performed for display unit 10 of the uppermost layer or display unit 10 that is located foremost.

The method of determining whether display unit 10 is located foremost can be realized by arranging sensors 11-1-11-7 that are photosensors such as in FIG. 14 or FIG. 17 and determining whether extraneous light is detected in all of sensors 11-1-11-7.

Although the present invention has been described with reference to exemplary embodiments, the present invention is not limited to the above-described exemplary embodiments. The configuration and details of the present invention are open to various modifications within the scope of the present invention that will be clear to one of ordinary skill in the art.

For example, in the above-described first and second exemplary embodiments, the size and shape of a specific region and the starting point and drawing direction of drawing within a specific region are only examples, and the present invention is not limited to these examples.

Still further, in display unit 10 in the above-described second exemplary embodiment, the number and positions of arrangement of sensors 11 when sensors 11 are photosensors and the regions that can be detected by sensors 11 when sensors 11 are contact sensors or proximity sensors are only examples, and the present invention is not limited to these examples.

In the above-described second exemplary embodiment, sensors 11 are provided in all display units 10-1-10-n, but the present invention is not limited to this example.

For example, in FIG. 3, it is not necessary to provide sensors 11 in display unit 10-1 if the insertion or extraction of display units 10-1-10-3 is not possible, if typical drawing control shown in FIG. 1 is performed for display unit 10-1, and if sensors 11 are constituted by photosensors. In addition, when the user rapidly flips through a plurality of display units 10 (assumed to be display units 10-1-10-5), it is assumed that display unit 10-6 that is located in a lower layer will next be rapidly flipped. If display units 10-1-10-5 are flipped from the right side at this time, the possibility that display unit 10-6 will similarly be flipped from the right side is considered to be high. Based on these assumptions, the vicinity of the right side of display unit 10-6 can be determined to be the specific region that is visible by the user based only on the detection results of sensors 11 that are provided in display units 10 that are positioned above display unit 10-6. As a result, sensors do not need to be provided on display unit 10-6. However, this drawing control presupposes that display units 10 are rapidly flipped. The determination of whether display units 10 are being rapidly flipped can be realized according to whether, for example, the speed of flipping display units 10 is equal to or greater than a predetermined value or the size of the specific region is equal to or less than a predetermined value. The drawing control described above in which drawing is performed only in specific regions of the display regions of display units 10 may be performed only when display units 10 are rapidly flipped.

In the second exemplary embodiment described hereinabove, an example was described in which the specific region was determined based on the detection results of sensors 11, but this determination method is only one example, and the present invention is not limited to this example.

The methods performed in display device 1 of the present invention may be applied to a program for causing execution by a computer. In addition, this program can be stored on a recording medium and can be provided to the outside by way of a network.

This application claims the benefits of priority based on Japanese Patent Application No. 2011-288929 for which application was submitted on December 28, 2011 and incorporates by citation all of the disclosures of that application.

## Claims

1. A display device comprising:
a plurality of display units;
a mechanism that binds together at least one part of each of said plurality of display units; and
a drawing control unit that, when performing drawing on a specific display unit from among said plurality of display units, performs drawing while prioritizing, from among display regions of said specific display unit, a specific region other than regions that contain said mechanism.

2. The display device as set forth in claim 1, wherein said drawing control unit does not perform drawing on, from among display regions of said specific display unit, regions other than said specific region.

3. A display device comprising:
a plurality of display units;
a visibility determination unit that determines, from among display regions of a specific display unit from among said plurality of display units, a specific region that is visible by the user; and
a drawing control unit that, when performing drawing on said specific display unit, performs drawing on display regions of said specific display unit based on determination results of said visibility determination unit.

4. The display device as set forth in claim 3, wherein:
a predetermined display unit among said plurality of display units is equipped with a sensor that detects extraneous light at a predetermined position of that predetermined display unit; and
said visibility determination unit determines said specific region of said specific display unit based on a detection result of said sensor.

5. The display device as set forth in claim 3, wherein:
a predetermined display unit among said plurality of display units is equipped with a sensor that detects contact or proximity of an object to a predetermined region of that predetermined display unit and the position of contact or proximity; and
said visibility determination unit determines said specific region of said specific display unit based on a detection result of said sensor.

6. The display device as set forth in any one of claims 3 to 5, wherein said drawing control unit performs drawing while prioritizing, from among display regions of said specific display unit, said specific region.

7. The display device as set forth in claim 6, wherein said drawing control unit does not perform drawing on, from among display regions of said specific display unit, regions other than said specific region.

8. A display method realized in a display device that has a plurality of display units and a mechanism that binds together at least one part of each of said plurality of display units, said display method comprising:
when performing drawing on a specific display unit from among said plurality of display units, performing drawing while prioritizing, from among display regions of said specific display unit, a specific region other than regions that include said mechanism.

9. A display method realized in a display device that has a plurality of display units, said display method comprising:
determining, from among display regions of a specific display unit from among said plurality of display units, a specific region that is visible by the user; and
when performing drawing on said specific display unit, performing drawing on display regions of said specific display unit based on said determination result.

10. A program for causing a display device that has a plurality of display units and a mechanism that binds together at least one part of each of said plurality of display units to execute a procedure of, when performing drawing on a specific display unit from among said plurality of display units, performing drawing while prioritizing, from among display regions of said specific display unit, a specific region other than regions that include said mechanism.

11. A program for causing a display device that has a plurality of display units to execute procedures of:
determining, from among display regions of a specific display unit from among said plurality of display units, a specific region that is visible by the user; and
when performing drawing on said specific display unit, performing drawing on display regions of said specific display unit based on said determination result.
